# FASCICULE DE BREVET EUROPEEN

(11) **EP 3 350 415 B1**
(45) Date de publication et mention de la délivrance du brevet: **17.07.2019**
(21) Numéro de dépôt: 16784224.4
(22) Date de dépôt: 15.09.2016
(51) Int. Cl.: F01D 5/18, F01D 9/04

(54) **SECTEUR DE DISTRIBUTEUR POUR TURBOMACHINE AVEC DES AUBES REFROIDIES DE MANIERE DIFFERENTIELLE**
LEITSCHAUFELRINGABSCHNITT FÜR EINEN TURBINENMOTOR MIT UNTERSCHIEDLICH GEKÜHLTEN SCHAUFELN
NOZZLE SECTOR FOR A TURBINE ENGINE WITH DIFFERENTIALLY COOLED BLADES

(30) Priorité: 17.09.2015 FR 1558759
(43) Date de publication de la demande: 25.07.2018
(73) Titulaire: Safran Aircraft Engines, 75015 Paris (FR)
(72) Inventeur: BAUMAS, Olivier Jean Daniel, 77550 Moissy-Cramayel (FR); ARRAITZ, Anne-Marie, 77550 Moissy-Cramayel (FR); BEGUIN, Anthony Pierre, 77550 Moissy-Cramayel (FR); DOUGLAS, Pragash, 77550 Moissy-Cramayel (FR)
(74) Mandataire: Brevalex
(86) Numéro de dépôt international: PCT/FR2016/052338
(87) Numéro de publication internationale: WO 2017/046534

(56) Documents cités:
- EP-A1- 1 895 105
- WO-A1-2011/039315
- WO-A1-2013/186756
- FR-A1- 2 928 962

## Description

### DOMAINE TECHNIQUE

L'invention concerne le refroidissement de secteurs de distributeur pour turbine de turbomachine. Elle s'applique à tout type de turbomachines terrestres ou aéronautiques, et notamment aux turbomachines d'aéronef telles que les turboréacteurs et les turbopropulseurs.

### ÉTAT DE LA TECHNIQUE ANTÉRIEURE

Les distributeurs de turbine de turbomachine d'aéronef sont conventionnellement divisés en secteurs le long de leur direction circonférentielle. Un secteur de distributeur comprend deux plateformes et une pluralité d'aubes s'étendant radialement entre les plateformes. Ces aubes sont espacées les unes des autres selon la direction circonférentielle du secteur. De l'air de refroidissement circule à l'intérieur des aubes pour les refroidir de manière identique les unes des autres.

Les aubes de secteur de distributeur sont soumises à des sollicitations mécaniques importantes qui peuvent aboutir jusqu'à la destruction de ces aubes. Il existe donc un besoin de réduire les sollicitations mécaniques des aubes.

FR 2 928 962 divulgue un secteur de distributeur de structure connue.

### EXPOSÉ DE L'INVENTION

L'invention vise à résoudre au moins partiellement le problème rencontré dans les solutions de l'art antérieur.

A cet égard, l'invention a pour objet un secteur de distributeur pour turbine de turbomachine.

Le secteur de distributeur comprend une plateforme radialement externe de support pour aubes et une plateforme radialement interne de support pour aubes. Le secteur comporte aussi une première aube d'extrémité, une deuxième aube d'extrémité et au moins une première aube centrale entre les aubes d'extrémité selon une direction circonférentielle des plateformes, les aubes s'étendant radialement entre les plateformes selon une direction d'envergure de ces aubes.

Le secteur de distributeur comprend également des moyens de refroidissement des aubes configurés pour refroidir chacune des aubes en y faisant circuler de l'air de refroidissement.

Selon l'invention, les moyens de refroidissement sont configurés pour refroidir de façon différentielle la ou chaque aube centrale au moins par rapport à la première aube d'extrémité.

Les moyens de refroidissement d'au moins une des aubes comprennent des trous de refroidissement, les trous de refroidissement traversant une paroi extérieure de l'aube et/ou une chemise de refroidissement à l'intérieur de l'aube.

Une paroi extérieure d'une première des aubes d'extrémité est traversée par des premiers trous de refroidissement, une paroi extérieure de la première aube centrale étant traversée par des deuxièmes trous de refroidissement, la surface totale des deuxièmes trous de refroidissement étant supérieure à celle des premiers trous de refroidissement.

En refroidissant de manière différentielle les aubes les unes des autres, les moyens de refroidissement permettent aux aubes de mieux s'adapter aux dilatations différentielles au sein des plateformes ou entre les plateformes qui sont plus rigides. Il en résulte une réduction des contraintes mécaniques exercées sur ces aubes, en particulier au niveau de leurs pales respectives.

L'invention peut comporter de manière facultative une ou plusieurs des caractéristiques suivantes combinées entre elles ou non.

Avantageusement, les moyens de refroidissement sont configurés pour moins refroidir la première aube d'extrémité que l'aube centrale.

Selon une particularité de réalisation, les moyens de refroidissement sont configurés pour refroidir autant la première aube d'extrémité que la deuxième aube d'extrémité.

Selon une forme de réalisation avantageuse, le secteur comprend au moins quatre aubes dont au moins une deuxième aube centrale entre les aubes d'extrémité selon une direction circonférentielle des plateformes, les moyens de refroidissement étant configurés pour refroidir autant la première aube centrale que la deuxième aube centrale.

Selon une autre forme de réalisation avantageuse, les moyens de refroidissement comprennent des moyens d'alimentation en air de refroidissement identiques pour chacune des aubes du secteur de distributeur.

L'invention porte également sur une turbine pour turbomachine comprenant au moins un secteur de distributeur telle que défini ci-dessus.

La turbine est de préférence une turbine basse pression pour turbomachine.

Le secteur de distributeur tel que défini ci-dessus fait de préférence partie du premier étage de turbine qui est situé le plus en amont de la turbine.

L'invention se rapporte aussi à une turbomachine comprenant une turbine telle que définie ci-dessus. La turbomachine est notamment une turbomachine d'aéronef.

Enfin, l'invention concerne un procédé de refroidissement d'un secteur de distributeur pour turbomachine, comprenant une étape de refroidissement différentiel d'une première aube centrale par rapport à une première aube d'extrémité.

Selon une forme de réalisation avantageuse, l'étape de refroidissement différentiel s'effectue en refroidissant moins la première aube d'extrémité que la première aube centrale.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 est une représentation schématique partielle d'une turbine pour turbomachine, selon un premier mode de réalisation de l'invention ;
- la figure 2 est une représentation schématique partielle en élévation vue de l'aval d'un secteur de distributeur de turbine, selon le premier mode de réalisation ;
- la figure 3 est une vue de côté selon la flèche A du secteur de distributeur selon le premier mode de réalisation ;
- la figure 4 est une représentation schématique partielle en coupe selon la ligne IV-IV d'une aube du secteur de distributeur;
- la figure 5 est une vue de côté d'une chemise de refroidissement située à l'intérieur d'une des aubes du distributeur selon le premier mode de réalisation ; et
- la figure 6 illustre la mise en oeuvre d'un procédé de refroidissement différentiel des aubes du secteur de distributeur selon le premier mode de réalisation.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

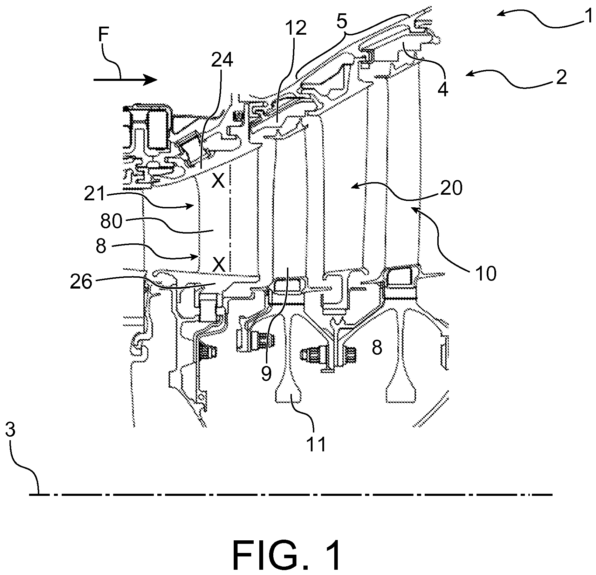

La figure 1 représente une turbine basse pression 2 pour turbomachine d'aéronef. La turbine basse pression 2 est annulaire autour d'un axe longitudinal 3 de turbomachine. Cet axe est également l'axe de rotation de la turbomachine 1.

La direction de l'axe longitudinal 3 d'une turbomachine 1, également appelé direction axiale, est celle de la direction principale d'écoulement normal F des gaz au sein de la turbomachine 1. Dans toute la description, il est noté que les termes amont et aval sont à considérer par rapport à cette direction F d'écoulement des gaz (de l'amont vers l'aval).

Une direction radiale de la turbomachine est une direction perpendiculaire à l'axe longitudinal 3 de la turbomachine 1 vers l'extérieur de la turbomachine. Une direction circonférentielle Z-Z est une direction ortho radiale, autour de l'axe longitudinal 3. En outre, sauf précision contraire, les adjectifs et adverbes axial, radial, circonférentiel, axialement et radialement sont utilisés en référence aux directions axiale, radiale et circonférentielle précitées. Les adjectifs interne et externe d'une part, inférieur et supérieur d'autre part sont également définis en fonction de leur distance à l'axe longitudinal 3.

La turbine basse pression 2 comporte une pluralité d'étages 4 logés dans un carter externe de turbine 5. Chaque étage 4 comprend une roue 10 et un distributeur 20.

La roue 10 est mobile en rotation autour de l'axe longitudinal 3 à l'intérieur d'un anneau sectorisé 12 qui est fixé au carter 5. Elle comporte une rangée annulaire d'aubes mobiles 9 et un disque 11 dans lequel sont engagées mécaniquement les aubes mobiles 9 en s'étendant radialement depuis le disque 11.

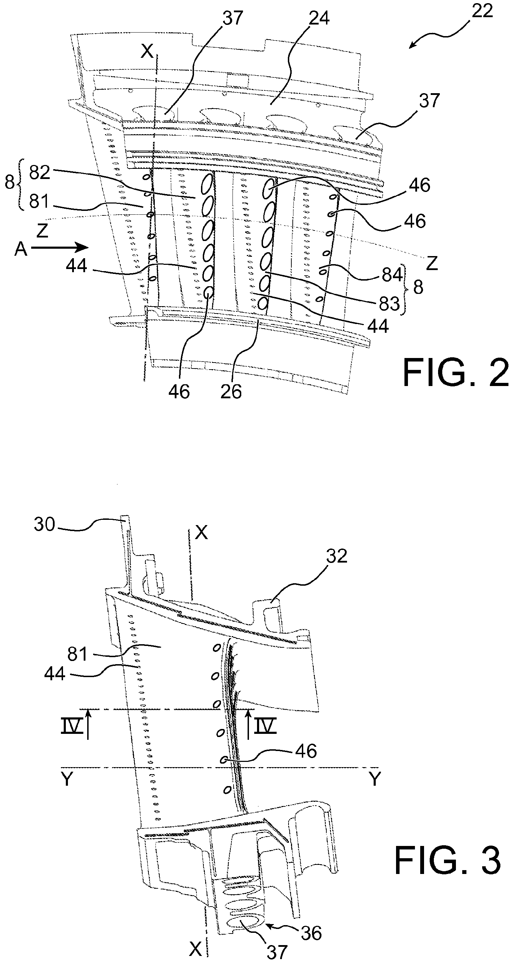

Le distributeur 20 fait partie du stator de la turbomachine. Il est divisé en secteurs annulaires 22 (figure 2) qui comprennent chacun des aubes fixes 8 espacées et qui sont intercalées axialement entre les rangées annulaires d'aubes mobiles 9. Les aubes fixes 8 comprennent chacune une plateforme supérieure 24, également appelée plateforme radialement externe 24, une plateforme inférieure 26, également appelée plateforme radialement interne 26, et une pale 80 s'étendant radialement entre la plateforme supérieure 24 et la plateforme inférieure 26. Ces aubes de distributeur 8 sont fixées au carter 5 via leur plateforme supérieure 24 par un rebord de fixation amont 32 et un rebord de fixation aval 30 qui sont représentés à la figure 3.

Les aubes fixes 8 de distributeur 20 sont soumises à des sollicitations mécaniques élevées, générés notamment par les dilatations différentielles au sein de ces aubes 8. Ces dilatations différentielles sont accentuées au niveau du premier étage de distributeur 21, du fait des gradients de température spécialement élevées qui s'y trouvent. Ce premier étage de distributeur 21 fait partie de l'étage situé le plus en amont dans la turbine basse pression 2.

Afin de réduire les sollicitations mécaniques des aubes fixes 8, celles-ci sont refroidies de manière différentielle au sein de secteurs de distributeur 22, de manière à mieux suivre les déformations mécaniques des plateformes 24, 26 qui sont plus rigides. Un tel secteur 22 est particulièrement adapté pour le premier étage de distributeur 21.

En référence à la figure 2, le secteur de distributeur 22 comprend quatre aubes fixes 81, 82, 83, 84 qui s'étendent radialement entre la plateforme supérieure 24 et la plateforme inférieure 26. Ces aubes 81, 82, 83, 84 sont espacées les unes des autres selon la direction circonférentielle Z-Z.

Ces aubes comprennent une première aube d'extrémité 81, une deuxième aube d'extrémité 84, ainsi qu'une première aube centrale 82 et une deuxième aube centrale 83. Les aubes centrales 82, 83 sont situées entre les aubes d'extrémité 81, 84 selon la direction circonférentielle Z-Z.

En référence conjointe à la figure 2 et à la figure 3, les aubes fixes 8 du secteur 22 sont alimentées en air de refroidissement par des conduits de refroidissement 37. Les conduits 37 les traversent de part en part selon leur direction d'envergure X-X qui correspond sensiblement à une direction radiale.

Les conduits 37 débouchent sur la plateforme supérieure 24 d'une part et au niveau du pied 36 du secteur de distributeur 22 d'autre part. Ils sont identiques pour chacune des aubes 81, 82, 83, 84 du secteur de distributeur 22 pour lesquelles ils forment des moyens d'alimentation en air de refroidissement.

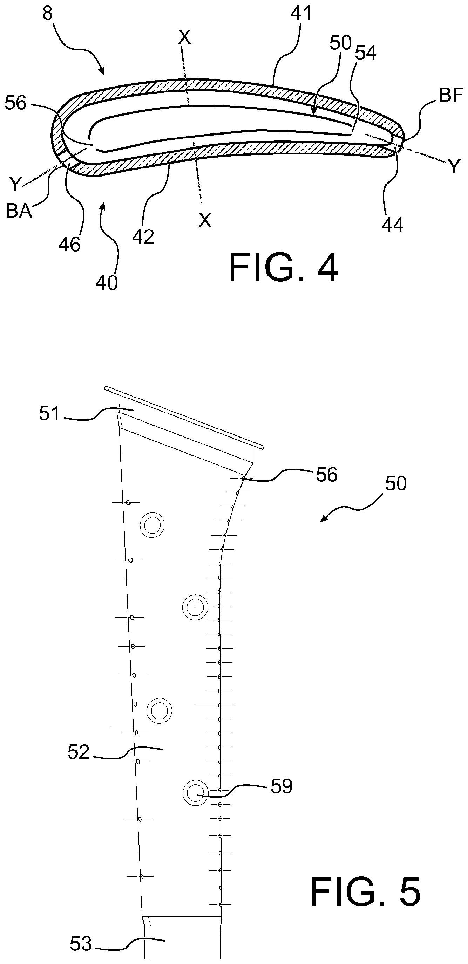

Chacune des aubes 81, 82, 83, 84 du secteur de distributeur comporte des trous de refroidissement 44, 46 pour expulser une partie de l'air qui y a circulé dans une veine de la turbomachine 1. Certains trous de refroidissement 46 traversent la paroi extérieure 40 de l'aube à proximité de son bord d'attaque BA, visible à la figure 4. D'autres trous de refroidissement 44 traversent la paroi extérieure 40 de l'aube à proximité de son bord de fuite BF, visible à la figure 4. Ces trous de refroidissement sont sensiblement alignés et espacés les uns des autres le long de la direction d'envergure X-X.

Les trous de refroidissement 44, 46 de la première aube centrales 82 sont de sections sensiblement identiques à celle des trous de refroidissement 44, 46 de la deuxième aube centrale 83. Par ailleurs, les trous de refroidissement 44, 46 des aubes centrales 82, 83 ont une section plus importante que celle des trous de refroidissement 44, 46 des aubes d'extrémité 81, 84, par exemple une section de 10% à 50% plus importante et de préférence de 10%à 15% plus importante. Les aubes centrales 82, 83 sont ainsi davantage refroidies que les aubes d'extrémité 81, 84. Les aubes d'extrémité 81, 84 se dilatent alors davantage sous l'effet des gaz chaud traversant la veine de turbomachine, pour mieux accompagner les déformations mécaniques des plateformes 24, 26. Il en résulte une diminution des contraintes mécaniques subies par les aubes 81, 82, 83, 84 du secteur de distributeur 22 qui s'adaptent mieux aux déformations des plateformes 24, 26.

En référence à la figure 4, chacune des pales 80 des aubes 81, 82, 83, 84 comprend une paroi d'extrados 41 et une paroi d'intrados 42 qui relient chacune le bord d'attaque BA au bord de fuite BF qui est situé en aval du bord d'attaque BA. Les parois d'intrados 41 et d'extrados 42 définissent en commun une paroi extérieure 40 de l'aube 8.

Les parois d'intrados 41 et d'extrados 42 sont espacées latéralement l'une de l'autre selon la direction circonférentielle Z-Z et définissent entre elles une ligne médiane, la ligne de squelette Y-Y, qui s'étend sensiblement selon la direction axiale.

La paroi extérieure 40 de l'aube est traversée par les trous de refroidissement amont 46 à proximité du bord d'attaque BA et les trous de refroidissement aval 44 à proximité du bord de fuite BF.

A l'intérieur de la paroi extérieure 40, l'aube 8 comprend une chemise 50 qui forme la partie du conduit de refroidissement 47 à l'intérieur de la pale 80.

En référence conjointe à la figure 4 et à la figure 5, la chemise de refroidissement comprend un corps 52 qui s'étend selon la direction d'envergure X-X depuis un rebord supérieur 51 jusqu'à un bord inférieur 53.

Le corps 52 est centré latéralement entre les parois d'extrados 41 et d'intrados 42 par des excroissances 59.

Le corps 52 est traversé par des trous de refroidissement aval 54 qui alimentent les trous de refroidissement aval 44 de la paroi extérieure 40 de l'aube depuis le conduit 37. Les trous de refroidissement aval 54 sont espacés les uns des autres en étant sensiblement alignés selon la direction d'envergure X-X.

Le corps 52 est traversé par des trous de refroidissement amont 56 qui alimentent les trous de refroidissement amont 46 de la paroi extérieure 40 de l'aube depuis le conduit 37. Les trous de refroidissement amont 56 sont espacés les uns des autres en étant sensiblement alignés selon la direction d'envergure X-X.

Les trous de refroidissement 54, 56 de la première aube centrale 82 sont de sections sensiblement identiques à celle des trous de refroidissement 54, 56 de la deuxième aube centrale 83.

Par ailleurs, les trous de refroidissement 54, 56 des aubes centrales 82, 83 ont une section plus importante que celle des trous de refroidissement 54, 56 des aubes d'extrémité 81, 84. Les aubes centrales 82, 83 sont ainsi davantage refroidies que les aubes d'extrémité 81, 84.

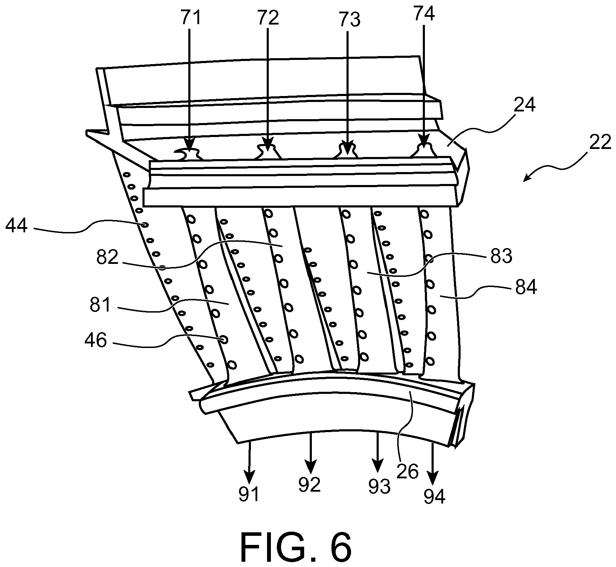

Le procédé de refroidissement du secteur de distributeur 22 est décrit en détail en référence à la figure 6.

Le procédé de refroidissement comprend une étape d'introduction d'air de refroidissement à l'intérieur de chacune des aubes 81, 82, 83, 84 selon des flux 71, 72, 73, 74 distincts.

Cet air est ensuite expulsé hors de chacune des aubes 81, 82, 83, 84 par les trous de refroidissement 44, 46 de l'aube et par le conduit 37 au niveau du pied 36.

Davantage d'air de refroidissement dans les aubes centrales 82, 83 que dans les aubes d'extrémité 81, 84, du fait de la différence de section totale des trous de refroidissement de ces aubes.

Plus précisément, les aubes d'extrémité 81, 84 sont comparativement moins refroidies dans un secteur de distributeur 22 selon l'invention que dans certains secteurs de distributeur 22 connus, ce qui est partiellement contraire au principe de refroidir au maximum les aubes 8 de distributeur pour favoriser leur tenue mécanique.

Néanmoins, le refroidissement différentiel des aubes 81, 82, 83, 84 permet de mieux accompagner les déformations mécaniques des plateformes 24, 26, ce qui accroît la tenue mécanique globale des aubes 8 au-delà de la perte en tenue mécanique provoquée par la température plus importante des aubes d'extrémités 81, 84.

Bien entendu, diverses modifications peuvent être apportées par l'homme du métier à l'invention qui vient d'être décrite sans sortir du cadre de l'exposé de l'invention.

Le secteur de distributeur 22 peut comporter cinq aubes 8 ou plus.

Il est possible de davantage refroidir l'une des aubes centrales 82, 83 par rapport à l'autre de ces aubes centrales 82, 83.

Si le secteur de distributeur 22 comporte trois aubes centrales ou plus, il est même préférable de refroidir davantage celles qui sont les plus proches de la ligne médiane du distributeur selon la direction circonférentielle Z-Z par rapport aux autres aubes centrales.

De même, il est envisageable de davantage refroidir l'une des aubes d'extrémité 81, 84 par rapport à l'autre de ces aubes d'extrémité 81, 84.

## Revendications

1. Secteur de distributeur (22) pour turbine (2) de turbomachine (1), comprenant :
une plateforme radialement externe (24) de support pour aubes,
une plateforme radialement interne (26) de support pour aubes,
une première aube d'extrémité (81), une deuxième aube d'extrémité (84) et au moins une première aube centrale (82, 83) entre les aubes d'extrémité (81, 84) selon une direction circonférentielle des plateformes (Z-Z), les aubes (81, 82, 83, 84) s'étendant radialement entre les plateformes (24, 26) selon une direction d'envergure (X-X) de ces aubes,
des moyens de refroidissement (37, 50, 44, 46, 54, 56) des aubes configurés pour refroidir chacune des aubes (81, 82, 83, 84) en y faisant circuler de l'air de refroidissement,
les moyens de refroidissement (37, 50, 44, 46, 54, 56) étant configurés pour refroidir de façon différentielle la ou chaque aube centrale (82, 83) au moins par rapport à la première aube d'extrémité (81, 84),
les moyens de refroidissement (37, 50, 44, 46, 54, 56) comprenant des trous de refroidissement (44, 46, 54, 56), les trous de refroidissement traversant une paroi extérieure d'au moins une des aubes et/ou une chemise de refroidissement à l'intérieur de l'aube,
la paroi extérieure (40) de la première des aubes d'extrémité (81, 84) étant traversée par des premiers trous de refroidissement (44, 46, 54, 56), le secteur de distributeur (22) étant **caractérisé en ce que** la paroi extérieure (40) de la première aube centrale (82, 83) est traversée par des deuxièmes trous de refroidissement (44, 46, 54, 56), la surface totale des deuxièmes trous de refroidissement étant supérieure à celle des premiers trous de refroidissement.

2. Secteur de distributeur (22) selon la revendication précédente, dans lequel les moyens de refroidissement (37, 50, 44, 46, 54, 56) sont configurés pour refroidir moins la première aube d'extrémité (81, 84) que l'aube centrale (82, 83).

3. Secteur de distributeur (22) selon l'une quelconque des revendications précédentes, dans lequel les moyens de refroidissement (37, 50, 44, 46, 54, 56) sont configurés pour refroidir autant la première aube d'extrémité (81, 84) que la deuxième aube d'extrémité (81, 84).

4. Secteur de distributeur (22) selon l'une quelconque des revendications précédentes, comprenant au moins quatre aubes (81, 82, 83, 84) dont au moins une deuxième aube centrale (82, 83) entre les aubes d'extrémité (81, 84) selon une direction circonférentielle des plateformes (Z-Z), les moyens de refroidissement (37, 50, 44, 46, 54, 56) étant configurés pour refroidir autant la première aube centrale (82, 83) que la deuxième aube centrale (82, 83).

5. Secteur de distributeur (22) selon l'une quelconque des revendications précédentes, dans lequel les moyens de refroidissement (37, 50, 44, 46, 54, 56) comprennent des moyens d'alimentation en air de refroidissement identiques pour chacune des aubes (81, 82, 83, 84) du secteur de distributeur (22).

6. Turbine (2) pour turbomachine (1), comprenant au moins un secteur de distributeur (22) selon l'une quelconque des revendications précédentes, la turbine (2) étant de préférence une turbine basse pression (2).

7. Turbomachine (1) comprenant une turbine (2) selon la revendication précédente.

8. Procédé de refroidissement d'un secteur de distributeur (22) pour turbomachine (1), comprenant une étape de refroidissement différentiel d'une première aube centrale (82, 83) par rapport à une première aube d'extrémité (81, 84), en refroidissant moins la première aube d'extrémité (81, 84) que l'aube centrale (82, 83),
les moyens de refroidissement (37, 50, 44, 46, 54, 56) comprenant des trous de refroidissement (44, 46, 54, 56), les trous de refroidissement traversant une paroi extérieure d'au moins une des aubes et/ou une chemise de refroidissement à l'intérieur de l'aube,
la paroi extérieure (40) de la première des aubes d'extrémité (81, 84) étant traversée par des premiers trous de refroidissement (44, 46, 54, 56), la paroi extérieure (40) de la première aube centrale (82, 83) étant traversée par des deuxièmes trous de refroidissement (44, 46, 54, 56), la surface totale des deuxièmes trous de refroidissement étant supérieure à celle des premiers trous de refroidissement.

## Patentansprüche

1. Leitrad-Segment (22) für Turbinen (2) von Turbotriebwerken (1), bestehend aus :
- einer radial äußeren Halteplattform (24) für Schaufeln,
- einer radial inneren Halteplattform (26) für Schaufeln,
- einer ersten außenliegenden Schaufel (81), einer zweiten außenliegenden Schaufel (84) und mindestens einer ersten, in einer Umfangsrichtung der Plattformen (Z-Z) zwischen den außenliegenden Schaufeln (81, 84) in der Mitte liegenden Schaufel (82, 83), wobei sich die Schaufeln (81, 82, 83, 84) radial zwischen den Plattformen (Z-Z) in einer Richtung der Blattspannweite (X-X) dieser Schaufeln erstrecken,
- Kühlmitteln (37, 50, 44, 46, 54, 56) der Schaufeln, die konzipiert sind, um jede der Schaufeln (81, 82, 83, 84) zu kühlen, indem dort Kühlluft zirkuliert wird,
wobei die Kühlmittel (37, 50, 44, 46, 54, 56) dergestalt konzipiert sind, dass sie die oder jede in der Mitte liegende Schaufel (82, 83) wenigstens im Verhältnis zur ersten außenliegenden Schaufel (81, 84) differenzierend kühlen,
wobei die Kühlmittel (37, 50, 44, 46, 54, 56) Kühlungsöffnungen (44, 46, 54, 56) umfassen, wobei die Kühlungsöffnungen durch eine Außenwand mindestens einer der Schaufeln und /oder einen Kühlmantel im Inneren der Schaufel gehen,
wobei durch die Außenwand (40) der ersten der außenliegenden Schaufeln (81, 84) erste Kühlungsöffnungen (44, 46, 54, 56) gehen,
**dadurch gekennzeichnet,**
**dass** durch die Außenwand (40) der ersten in der Mitte liegenden Schaufel (82, 83) zweite Kühlungsöffnungen (44, 46, 54, 56) gehen, wobei die Gesamtoberfläche der zweiten Kühlungsöffnungen größer ist als die der ersten Kühlungsöffnungen.

2. Leitrad-Segment (22) nach dem vorherigen Anspruch, bei dem die Kühlmittel (37, 50, 44, 46, 54, 56) dergestalt konzipiert sind, dass sie die erste außenliegende Schaufel (81, 84) weniger stark kühlen als die in der Mitte liegende Schaufel (82, 83).

3. Leitrad-Segment (22) nach einem der vorherigen Ansprüche, bei dem die Kühlmittel (37, 50, 44, 46, 54, 56) dergestalt konzipiert sind, dass sie die erste außenliegende Schaufel (81, 84) ebenso stark kühlen wie die in der Mitte liegende Schaufel (82, 83).

4. Leitrad-Segment (22) nach einem der vorherigen Ansprüche, das mindestens vier Schaufeln (81, 82, 83, 84) aufweist, darunter mindestens eine zweite in einer Umfangsrichtung der Plattformen (Z-Z) zwischen den außenliegenden Schaufeln (81, 84) in der Mitte liegende Schaufel (82, 83), wobei die Kühlmittel (37, 50, 44, 46, 54, 56) dergestalt konzipiert sind, dass sie die erste in der Mitte liegende Schaufel (82, 83) ebenso stark kühlen wie die zweite in der Mitte liegende Schaufel (82, 83).

5. Leitrad-Segment (22) nach einem der vorherigen Ansprüche, bei dem die Kühlmittel (37, 50, 44, 46, 54, 56) Mittel zum Zuführen von Kühlluft umfassen, die bei jeder der Schaufeln (81, 82, 83, 84) des Leitrad-Segments (22) gleich sind.

6. Turbine (2) für Turbotriebwerke (1), die mindestens ein Leitrad-Segment (22) nach einem der vorherigen Ansprüche aufweist, wobei die Turbine (2) vorzugsweise eine Niederdruck-Turbine (2) ist.

7. Turbotriebwerk (1), das eine Turbine (2) nach dem vorherigen Anspruch aufweist.

8. Kühlverfahren für ein Leitrad-Segment (22) von Turbotriebwerken (1), das einen Verfahrensschritt der differenzierenden Kühlung einer ersten in der Mitte liegenden Schaufel (82, 83) im Verhältnis zu einer ersten außenliegenden Schaufel (81, 84) umfasst, indem die erste außenliegende Schaufel (81, 84) weniger stark gekühlt wird als die in der Mitte liegende Schaufel (82, 83),
wobei die Kühlmittel (37, 50, 44, 46, 54, 56) Kühlungsöffnungen (44, 46, 54, 56) umfassen, wobei die Kühlungsöffnungen durch eine Außenwand mindestens einer der Schaufeln und /oder einen Kühlmantel im Inneren der Schaufel gehen,
wobei durch die Außenwand (40) der ersten der außenliegenden Schaufeln (81, 84) erste Kühlungsöffnungen (44, 46, 54, 56) gehen, wobei durch die Außenwand (40) der ersten in der Mitte liegenden Schaufel (82, 83) zweite Kühlungsöffnungen (44, 46, 54, 56) gehen, wobei die Gesamtoberfläche der zweiten Kühlungsöffnungen größer ist als die der ersten Kühlungsöffnungen.

## Claims

1. A nozzle sector (22) for a turbine (2) of a turbomachine (1), comprising:
a radially outer platform (24) for supporting vanes,
a radially inner platform (26) for supporting vanes,
a first end vane (81), a second end vane (84) and at least one first central vane (82, 83) between the end vanes (81, 84) along a circumferential direction of the platforms (Z-Z), the vanes (81, 82, 83, 84) radially extending between the platforms (24, 26) along a span direction (X-X) of these vanes,
cooling means (37, 50, 44, 46, 54, 56) for cooling the vanes, configured to cool each of the vanes (81, 82, 83, 84) by circulating cooling air therein,
wherein the cooling means (37, 50, 44, 46, 54, 56) are configured to differentially cool the or each central vane (82, 83) at least with respect to the first end vane (81, 84),
the cooling means (37, 50, 44, 46, 54, 56) comprising cooling holes (44, 46, 54, 56), the cooling holes passing through an external wall of at least one of the vanes and/or a cooling jacket inside the vane, first cooling holes (44, 46, 54, 56) passing through the external wall (40) of the first of the end vanes (81, 84),
**characterized in that** second cooling holes (44, 46, 54, 56) are passing through the external wall (40) of the first central vane (82, 83), the total area of the second cooling holes being higher than that of the first cooling holes.

2. The nozzle sector (22) according to the preceding claim, wherein the cooling means (37, 50, 44, 46, 54, 56) are configured to cool the first end vane (81, 84) less than the central vane (82, 83).

3. The nozzle sector (22) according to any of the preceding claims, wherein the cooling means (37, 50, 44, 46, 54, 56) are configured to cool the first end vane (81, 84) as much as the second end vane (81, 84).

4. The nozzle sector (22) according to any of the preceding claims, comprising at least four vanes (81, 82, 83, 84) including at least one second central vane (82, 83) between the end vanes (81, 84) along a circumferential direction of the platforms (Z-Z), the cooling means (37, 50, 44, 46, 54, 56) being configured to cool the first central vane (82, 83) as much as the second central vane (82, 83).

5. The nozzle sector (22) according to any of the preceding claims, wherein the cooling means (37, 50, 44, 46, 54, 56) comprise identical cooling air feeding means for each of the vanes (81, 82, 83, 84) of the nozzle sector (22).

6. A turbine (2) for a turbomachine (1), comprising at least one nozzle sector (22) according to any of the preceding claims, the turbine (2) being preferably a low pressure turbine (2).

7. A Turbomachine (1) comprising a turbine (2) according to the preceding claim.

8. A method for cooling a nozzle sector (22) for a turbomachine (1), comprising a step of differentially cooling a first central vane (82, 83) with respect to a first end vane (81, 84), by cooling the first end vane (81, 84) less than the central vane (82, 83),
the cooling means (37, 50, 44, 46, 54, 56) comprising cooling holes (44, 46, 54, 56), the cooling holes passing through an external wall of at least one of the vanes and/or a cooling jacket inside the vane,
first cooling holes (44, 46, 54, 56) passing through the external wall (40) of the first of the end vanes (81, 84), second cooling holes (44, 46, 54, 56) passing through the external wall (40) of the first central vane (82, 83), the total area of the second cooling holes being higher than that of the first cooling holes.
